# EUROPÄISCHE PATENTSCHRIFT

(11) **EP 0 617 853 B1**
(45) Veröffentlichungstag und Bekanntmachung des Hinweises auf die Patenterteilung: **16.07.1997**
(21) Anmeldenummer: 93922881.3
(22) Anmeldetag: 19.10.1993
(51) Int. Cl.: H02G 3/12

(54) **SCHALTER-, ABZWEIG-SCHALTER-BZW. ABZWEIGDOSE FÜR ELEKTRISCHE GEBÄUDEINSTALLATIONEN**
SWITCH, DISTRIBUTION SWITCH OR JUNCTION BOX FOR ELECTRIC BUILDING INSTALLATIONS
BOITE D'INTERRUPTEUR, BOITE DE COMMUTATEUR DE DERIVATION OU BOITE DE RACCORDEMENT POUR INSTALLATIONS ELECTRIQUES D'IMMEUBLES

(30) Priorität: 19.10.1992 DE 4235196
(43) Veröffentlichungstag der Anmeldung: 05.10.1994
(73) Patentinhaber: ALTO AUTOMATION-ENTWICKLUNG-FERTIGUNG-VERKAUF ELEKTRONISCHER GERÄTE gmbH, D-27431 Bad Lauterberg (DE); Mühl, Christian, D-82031 Grünwald (DE)
(72) Erfinder: MÜHL, Christian, D-82031 Grünwald (DE); NIMBACH, Martin, D-82031 Grünwald (DE)
(74) Vertreter: Vogeser, Werner, Dipl.-Ing.
(86) Internationale Anmeldenummer: DE9300990
(87) Internationale Veröffentlichungsnummer: WO9409539

(56) Entgegenhaltungen:
- DE-A- 3 938 337
- FR-A- 2 556 891
- US-A- 3 684 819

## Beschreibung

Die Erfindung betrifft eine Schalter-, Abzweig-Schalter-bzw. Abzweigdose für elektrische Gebäudeinstallationen entsprechend dem Oberbegriff des Anspruchs 1.

Eine Abzweigdose dieser Art ist aus FR-A-2 556 891 bekannt geworden.

Derartige, seit langem übliche und meist aus Kunststoff bestehende Dosen sind grundsätzlich in zwei verschiedenen Ausführungsformen bekannt. Bei Beton- oder auch Unterputz-Installation werden Dosen verwendet, die vorstehende Rohreinführungs-Anschlußstutzen aufweisen, die als Verankerungselemente über das Dosengehäuse vorstehen. Bei Hohlwand-Installation in Gips-Kartonwänden oder auch in Möbelstücken wird die Öffnung zum Einsetzen der üblicherweise kreisrunden Dosen vor der Installation erstellt, so daß diese keine vorstehenden Anschlußstutzen haben darf. In diesem Falle sind für das Einführen von Installationsanlagen-Leerrohren Öffnungen im Dosengehäuse vorgesehen, in die die Leerrohre eingeführt werden. Bei der nachträglichen Änderung der Verschaltung, wenn also in die Leerrohre neue Kabel eingezogen werden müssen, ergeben sich häufig Anschlußschwierigkeiten, da die Leerrohre meist nicht vorschriftsmäßig verlegt, d.h., verankert werden.

Bei beiden Dosenarten ergibt sich ein weiteres Problem dadurch, daß immer häufiger außer den üblichen Netz leitungen auch Signalleitungen wie Datenbusse verlegt werden müssen, in den Dosen aber keine klare Trennung beider Leitungsarten möglich ist.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Durch die lösbar arretierbare elastische Trennplatte kann das Dosengehäuse in zwei Kammern unterteilt werden, so daß in der einen Kammer nur die Netzleitungen und in der anderen nur die Signalleitungen untergebracht werden können. Dabei werden Anschlußstutzen für Leerrohre im Bereich der Trennplatte vorgesehen, die also in beide Kammern münden, so daß durch diese Anschlußstutzen Netzleitungen in die eine und Signalleitungen in die andere Kammer geführt werden können.

Wenn die Anschlußstutzen gegenüber dem Außenumfang des Gehäuses zurückgesetzt sind bzw. über dieses nicht vorstehen, kann eine solche Dose auch für eine Hohlwand-Installation oder für Möbelstücke verwendet werden. Das Dosengehäuse hat im Bereich der Anschlußstutzen einen geringeren Durchmesser bzw. Abflachungen, so daß die Anschlußstutzen entsprechend zurückgesetzt sein können.

Das Dosengehäuse ist im Bereich der Anschlußstutzen verengt bzw. abgeflacht, jedoch stehen diese über den normalen Dosendurchmesser vor. Im Bedarfsfall ist es dann möglich, die Anschlußstutzen ggfs. unter Zuhilfenahme entsprechender Sollbruchstellen auf die gewünschte Länge zu reduzieren.

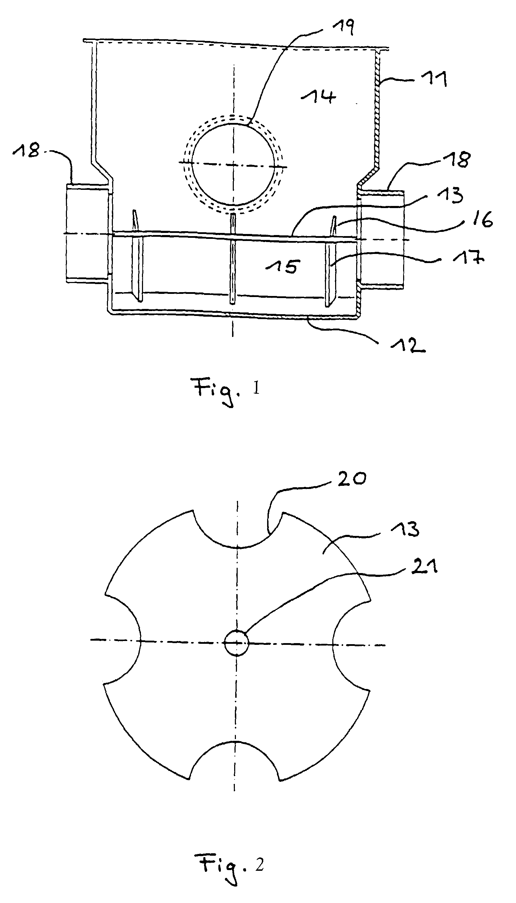

Die Erfindung wird nachstehend anhand der Figuren 1 und 2 beispielsweise erläutert. Es zeigen:

Fig. 1 und 2 einen Längsschnit der Dose.

Fig. 2 eine Aufsicht einer Trennplatte.

Die Dose der Fig. 1 hat ein kreisrundes Gehäuse 11 aus Kunststoff, das unten mit einem Boden 12 verschlossen ist. Üblicherweise vorgesehene Krallenbefestigungseinrichtungen und Geräte- bzw. Deckelbefesstigungseinrichtungen sind nicht gezeigt.

Im unteren Teil des Gehäuses ist eine lösbar arretierbare elastische Trennplatte 13 vorgesehen, die auf axialen Auflagestegen 17 aufsitzt. Zur Arretierung haben die Stege 17 Vorsprünge 16, unter die die Trennplatte 13 beim Einsetzen gedrückt wird. Nicht gezeigte ausbrechbare Kabel- und Rohreinführungen sind zweckmäßigerweise im Bereich der Trennplatte 13 vorgesehen, so daß die Netzleitungen und die Signalleitungen in den durch die Trenmnplatte 13 gebildeten Kammern 14 und 15 installiert werden können.

Im unteren Teil ist das Dosengehäuse abgeflacht bzw. hat einen geringeren Durchmesser. In diesem Bereich sind vorstehende Anschlußstutzen 18 für Installationsanlagen-Leerrohre vorgesehen. Diese Stutzen stehen über den normalen Gehäusedurchmesser vor, so daß die Dose zur Beton- und Unterputzinstallation geeignet ist.

Die Anschlußstutzen münden im Bereich der Trennplatte 13, so daß die Netz- und die Signalleitungen aus den Leerrohren unmittelbar in die entsprechenden Kammern 14, 15 geführt werden können.

Fig. 2 zeigt eine Aufsicht einer Trennplatte 13, die am Umfang Ausnehmungen 20 aufweist, die für das Durchführen von Leitungen von der einen in die andere Kammer vorgesehen sind. Zum Herausnehmen der Trennplatte 13 ist eine zentrale Öffnung 21 vorgesehen, durch die ein Haken eingeführt werden kann.

Bei der Ausführungsform der Fig. 1 ist noch eine weitere Öffnung 19 im Gehäuse 11 vorhanden, über die ebenfalls Leitungen verlegt werden können.

Die Ausführungsform der Fig. 1 ist grundsätzlich nur für die Beton- oder Unterputz-Installation geeignet, kann aber auch z.B. zur Hohlwand-Installation verwendet werden, wenn die Anschlußstutzen 18 auf den Gehäusedurchmesser verkürzt werden.

## Patentansprüche

1. Schalter-, Abzweig-Schalter- bzw. Abzweigdose für elektrische Gebäudeinstallationen, bestehend aus einem topfförmigen, mittels eines Deckels verschließbaren Gehäuse mit Kabel- und Rohreinführungen, Krallenbefestigungseinrichtungen und Geräte- sowie Deckelbefestigungseinrichtungen, und einer lösbar arretierbaren, Durchgangsöffnungen (20) aufweisenden Trennwand (13) etwa parallel zum Boden, durch die das Gehäuse in zwei Kammern (14,15) unterteilbar ist, gekennzeichnet durch am Gehäuse (11) vorstehende Anschlußstutzen (18) für Leerrohre, die im Bereich der elastischen Trennwand (13) in die beiden Kammern (14, 15) münden, und dadurch, daß das Gehäuse (11) im Bereich der Anschlußstutzen (18) verengt ist.

2. Schalter-, Abzweig-Schalter- bzw. Abzweigdose für elektrische Gebäudeinstallation nach Anspruch 1,
**gekennzeichnet durch**
axiale Auflagestege (17) für die Trennplatte (13).

3. Schalter-, Abzweig-Schalter- bzw. Abzweigdose für elektrische Gebäudeinstallationen nach Anspruch 1 oder 2,
**gekennzeichnet durch**
Arretierungsvorsprünge für die Trennplatte (13).

4. Schalter-, Abzweig-Schalter- bzw. Abzweigdose für elektrische Gebäudeinstallationen nach Anspruch 1 bis 3,
**dadurch gekennzeichnet, daß**
die Anschlußstutzen (18) gegenüber dem maximalen Außenumfang des Gehäuses (11) zurückgesetzt sind.

5. Schalter-, Abzweig-Schalter- bzw. Abzweigdose für elektrische Gebäudeinstallationen nach Anspruch 1 bis 4,
**dadurch gekennzeichnet, daß**
die Trennplatte (13) am Umfang Ausnehmungen (20) hat.

6. Schalter-, Abzweig-Schalter- bzw. Abzweigdose für elektrische Gebäudeinstallationen nach Anspruch 1 bis 5, **dadurch gekennzeichnet, daß** die Trennplatte (13) eine zentrale Öffnung (21) hat.

## Claims

1. Switch box, distribution switch box or distribution box for electrical building installations comprising a pot-shaped casing which may be closed by a cover and which has cable- and tube entrances, claw mounting means, apparatus- and cover mounting means and a partition (13) which is oriented generally parallel to the bottom, which may be detachably locked, which has through openings (20) and by which the casing is separated in two chambers (14, 15),
**characterized by**
connecting branches (18) for conduits which project from the casing (11) and which lead in the region of the elastic partition (13) into both chambers (14, 15), and charcacterized in that the casing (11) is narrowed in the region of the connecting branches (18).

2. Switch box acc. to claim 1,
**characterized by**
axial supporting webs (17) for the partition (13).

3. Switch box acc. to claim 1 or 2,
**characterized by**
locking noses for the partition (13).

4. Switch box acc. to claims 1 to 3,
**characterized in that**
the connecting branches (18) are backwardly offset with respect to the maximum outer circumference of the casing (11).

5. Switch box acc. to claims 1 to 4,
**characterized in that**
the partition (13) is provided with recesses (20) in the circumference.

6. Switch box acc. to claims 1 to 5,
**characterized in that**
the partition (13) is provided with a central opening (21).

## Revendications

1. Boîte d'interrupteur, boîte de connexion et d'interrupteur ou boîte de connexion pour installations électriques d'immeubles, formée d'un corps en forme de gobelet pouvant être fermé par un couvercle, avec des entrées de câbles et de tubes, des moyens de fixation à griffes et des moyens de fixation pour les appareils et le couvercle, et d'une cloison (13) pouvant être fixée de manière démontable et présentant des ouvertures de passage (20), qui s'étend sensiblement parallèlement au fond et à l'aide de laquelle le corps de boîte peut être divisé en deux chambres (14,15), caractérisée par des embouts (18) de raccordement pour des tubes disponibles, qui font saillie sur le corps (11) et débouchent dans les deux chambres (14,15), dans la région de la cloison (13) élastique, et par le fait que le corps (11) présente une section rétrécie dans la région des embouts (18) de raccordement.

2. Boîte d'interrupteur, boîte de connexion et d'interrupteur ou boîte de connexion pour installations électriques d'immeubles selon la revendication 1, caractérisée par des nervures (17) axiales d'appui pour la plaque de séparation (13).

3. Boîte d'interrupteur, boîte de connexion et d'interrupteur ou boîte de connexion pour installations électriques d'immeubles selon la revendication 1 ou 2, caractérisée par des saillies de retenue pour la plaque de séparation (13).

4. Boîte d'interrupteur, boîte de connexion et d'interrupteur ou boîte de connexion pour installations électriques d'immeubles selon les revendications 1 à 3, caractérisée par le fait que les embouts (18) de raccordement sont en retrait par rapport au diamètre extérieur maximal du corps (11).

5. Boîte d'interrupteur, boîte de connexion et d'interrupteur ou boîte de connexion pour installations électriques d'immeubles selon les revendications 1 à 4, caractérisée par le fait que la plaque de séparation (13) est pourvue d'évidements sur son pourtour.

6. Boîte d'interrupteur, boîte de connexion et d'interrupteur ou boîte de connexion pour installations électriques d'immeubles selon les revendications 1 à 5, caractérisée par le fait que la plaque de séparation (13) comporte une ouverture (21) centrale.
